# EUROPEAN PATENT SPECIFICATION

(11) **EP 2 165 596 B1**
(45) Date of publication and mention of the grant of the patent: **11.01.2017**
(21) Application number: 09170950.1
(22) Date of filing: 22.09.2009
(51) Int. Cl.: A01G 9/14, E04D 3/08, E06B 3/54

(54) **A greenhouse and a pane supporting element**
Gewächshaus und Glasscheibentrageelement
Serre et élément de soutien des vitres

(30) Priority: 23.09.2008 NL 2002011
(43) Date of publication of application: 24.03.2010
(73) Proprietor: Boal Systemen B.V., 2691 HC 's Gravenzande (NL)
(72) Inventor: Van Holsteijn, Gerardus Jacobus Maria, 2294 CM, Wateringen (NL)
(74) Representative: Zonneveld, Hendrik Jan

(56) References cited:
- EP-A- 1 464 769
- EP-A- 1 474 967
- GB-A- 2 294 965
- NL-A- 8 200 282
- US-A- 2 691 352

## Description

The present invention relates to a greenhouse comprising a glazing bar including a glazing bar rabbet, the glazing bar rabbet being provided with a pane supporting element which supports a pane, wherein the pane supporting element is provided with a fixation portion which is in contact with the glazing bar and a pane receiving portion for receiving an end portion of the pane.

Such a greenhouse is known from NL 8200282. The pane supporting element of the known greenhouse is disposed in the glazing bar rabbet and attached to the glazing bar. The pane supporting element comprises a projection or hanging lip directed to the pane so as to clamp the pane within the pane supporting element. During assembly of the greenhouse a pane is moved into the pane supporting element.

GB 2 294 965 is related to a kit for edging a glass panel, which comprises a solid plastics gasket of a U-profile, preferably formed by extrusion, for flitting over the edge of the panel, and a channel member affixable to an adjacent member or surface and having a longitudinal channel adapted to receive the plastics gasket and panel edge. Preferably, projections or ridges are provided on the outer surface of the gasket which engage with corresponding projections on the interior surface of the channel member, and projections or ridges on the interior of the gasket to grip the panel edge. Also disclosed is a second kit in which the glass panel is edged by a first L-profile member and a second interengageable member. Also described is a method of providing a glass partition in which the first kit is employed at the top and side surfaces of the glass panels, and the second kit is employed at the floor.

The object of the invention is to provide a greenhouse which can be assembled in an easier manner.

This is achieved by the greenhouse according to the invention, which is characterized in that the pane receiving portion is disposed deeper in the glazing bar rabbet than the fixation portion and is movable with respect to the glazing bar at least in a direction perpendicular to the pane in assembled condition.

Due to these features a greater variation of the angle between the pane and the glazing bar is allowed when inserting the pane into the glazing bar rabbet, because of the freedom of movement of the pane receiving portion within the glazing bar rabbet. It is not necessary to insert the pane into the glazing bar rabbet exactly parallel to the inner walls of the pane supporting element. In practice, the pane receiving portion may be substantially free from the glazing bar such that the pane receiving portion is freely movable in opposite directions perpendicular to the pane in assembled condition.

The pane supporting element may have a U-shaped cross section whereas the pane receiving portion is formed by a lower portion of the U-shape. This is a shape which can be manufactured relatively easily, for example by injection moulding in case of a plastic.

In a preferred embodiment the pane receiving portion is convergent as seen from the open end of the U-shaped cross section of the pane supporting element to the bottom thereof, because this guides the end portion of the pane into the pane receiving portion when inserting the pane into the pane supporting element and helps the person who assembles the greenhouse to guide the pane.

The pane supporting element may be a flexible element allowing the pane receiving portion to be movable with respect to the fixation portion. In this case the receiving portion and the fixation portion may consist of a single member, for example a plastic strip made by injection moulding, extrusion or the like.

At least the pane receiving portion may have a smooth outer surface. The advantage of this embodiment is that the pane easily slides along the wall of the pane receiving portion during insertion of the pane into the pane supporting element.

Preferably, the pane supporting element is made of a hard material since this further reduces resistance between the pane and the pane supporting element during the movement of insertion.

The pane supporting element may have an extension which covers an outer side of the glazing bar. This provides the opportunity to make the pane supporting element of an insulating material such that for example a glazing bar section made of aluminium is insulated by the pane supporting element. This is advantageous in terms of energy consumption.

The fixation portion may be formed by opposite leg parts of the U-shaped pane supporting element, wherein at least one of the leg parts is attached to the glazing bar. In practice the leg parts are in contact with edges of the glazing bar rabbet at the opening thereof and in this embodiment at least one of them is also attached to the glazing bar.

In a particular embodiment one of the leg parts is attached to the glazing bar and the opposite leg part is movable with respect to the glazing bar in at least a direction parallel to the pane in assembled condition. This means that a big part of the pane supporting element is also movable in a direction parallel to the pane within the glazing bar rabbet. In that case the movable part of the pane supporting element may rotate about the attached leg part.

In a preferred embodiment the lower portion of the U-shape and the glazing bar are adapted such that the distance between the glazing bar and the lower portion at the side of the attached leg part is smaller than the distance between the glazing bar and the lower portion at the side of the movable leg part, as seen parallel to the pane in assembled condition. This configuration allows a part of the pane supporting element to be displaced parallel to the pane in the direction of the glazing bar, for example in case of expansion of the pane due to a temperature increase thereof. In this case the movable part of the pane supporting element is rotatable about the attached leg part.

The invention will hereafter be elucidated with reference to the schematic drawings showing an embodiment of the invention by way of example.
Fig. 1 is a cross-sectional view of a part of an embodiment of the greenhouse according to the invention.
Fig. 2. is a similar view as Fig. 1 of an alternative embodiment.
Fig. 3 is a similar view as Fig. 1 and 2 of an alternative embodiment on a larger scale.

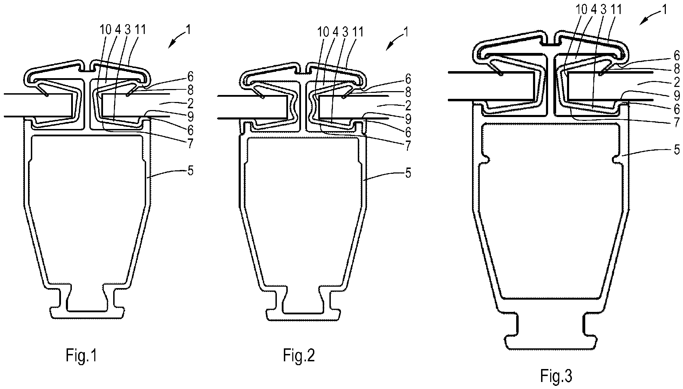

Fig. 1 shows a part of an embodiment of a greenhouse according to the invention. More specifically, Fig. 1 shows a cross section of a glazing bar 1. In general a greenhouse comprises an inclined roof which is provided with glazing bars 1 disposed at a certain distance with respect to each other, in most cases parallel to each other. The glazing bars 1 are connected to each other via a pane 2. The pane 2 is supported by a pane supporting element 3 which is inserted into a glazing bar rabbet 4. The glazing bar rabbet 4 is a recess in longitudinal direction of an elongated glazing bar section 5, which may be made by extrusion of aluminium.

A fixation portion 6 of the pane supporting element 3 is in contact with the glazing bar section 5. In this case it is fixed to the glazing bar section 5 by clamping the fixation portion 6 to edges of the glazing bar section 5 at an open end of the glazing bar rabbet 4. The edges at the open end form projections directed inwardly of the glazing bar rabbet 4 in order to hold the pane supporting element 3 in the glazing bar rabbet 4. Fig. 1 shows that a part of the fixation portion 6 located at the lower side of the pane supporting element 3 is allowed to displace with respect to the glazing bar section 5 in a direction parallel to the plane of the pane 2. In case of expansion of the pane 2 due to increase of its temperature the pane 2 may push against the bottom of the pane supporting element 3 such that the lower part of the fixation portion 6 is moved in the direction of the glazing bar rabbet 4 and a big part of the pane supporting element 3 is slightly rotated with respect to a part of the fixation portion 6 at the upper side of the pane supporting element 3.

The pane supporting element 3 is also provided with a pane receiving portion 7. The pane receiving portion 7 receives an end portion of the pane 2 as shown in Fig. 1. The pane receiving portion 7 is disposed deeper in the glazing bar rabbet 4 than the fixation portion 6. In other words, the distance between the open end of the glazing bar rabbet 4 and the pane receiving portion 7 is larger than the distance between the open end of the glazing bar rabbet 4 and the fixation portion 6 as seen along the pane 2. In assembled condition as shown in Fig. 1 the pane 2 is clamped between a flexible hanging lip or projection 8 and a carrying portion 9 of the pane supporting element 3. In this case the projection 8 and the carrying portion 9 are disposed near the fixation portion 6, but alternative locations are possible. It is possible, for example, that the pane 2 is fixed to the pane supporting element 3 near an edge 10 of the pane 2 and at the pane receiving portion 7.

The embodiment of Fig. 1 shows that the pane receiving portion 7 is free from the glazing bar section 5. The pane receiving portion 7 is movable within the glazing bar rabbet 4. The freedom of movement is caused by the flexibility of the pane supporting element 3. The pane receiving portion 7 is movable with respect to the glazing bar section 5 in a direction perpendicular to the pane 2 when the glazing bar 1 and the pane 2 are in assembled condition as seen in Fig. 1. Since in the embodiment as shown in Fig. 1 the pane receiving portion 7 is free at both sides of the pane supporting element 3 as seen perpendicular to the pane 2, the pane receiving portion 7 is movable upwardly and downwardly in this case. It might be conceivable that the pane receiving portion 7 is configured such that a wall thereof abuts against the glazing bar section 5 whereas only the opposite side of the pane receiving portion 7 is free from the glazing bar section 5.

The pane supporting element 3 of the embodiment of Fig. 1 has a U-shaped cross section within the glazing bar rabbet 4 and the pane receiving portion 7 is formed by a lower portion of the U-shape. Herein, the word "lower" means deeper in the glazing bar rabbet 4 as seen from the open end thereof. In an alternative embodiment as shown in Fig. 2 the pane supporting element 3 has a W-shape. In this case the fixation portion 6, formed by two parts at opposite legs of the W-shaped pane supporting element 3, is fixed at opposite sides of the glazing bar section 5 at the opening of the glazing bar rabbet 4. In case of expansion of the pane 2 the pane supporting element 3 will deform at the bottom of the W-shape.

The embodiments of Fig. 1 and 2 show that the pane receiving portion 7 is convergent as seen from the open end of the U-shaped or W-shaped cross section of the pane supporting element 3 to the bottom thereof. When installing a pane 2 into the glazing bar 1 the pane 2 is inserted into the pane supporting element 3 between the projection 8 and the carrying portion 9 in the direction of the bottom of the U-shaped or W-shaped pane receiving portion 7. During this movement the pane 2 may be angled with respect to the orientation of the pane 2 in assembled condition about a line parallel to the glazing bar rabbet 4. Because of the freedom of movement of the pane receiving portion 7 a relatively wide angle is allowable. When the pane 2 hits a wall of the pane receiving portion 7 the latter will not only be displaced but also guide the pane 2, such that the person who inserts the pane 2 will feel that the angle of the pane 2 should be decreased.

Insertion of the pane 2 into the pane supporting element 3 is further facilitated when the pane receiving portion has a smooth outer surface. If the pane supporting element is also made of a hard material the insertion is further simplified. A hard material does not mean that the pane supporting element 3 is less flexible, but it means that a softer or relatively resilient material, for example rubber, makes insertion of the pane 2 more difficult since it increases the resistance when sliding the pane 2 along this type of material.

Fig. 1 and 2 show that the pane supporting element 3 is provided with an extension 11 which covers an upper side of the glazing bar section 5. An edge of the extension 11 is formed such that it falls in a recess of the glazing bar section 5 which recess extends parallel to the glazing bar rabbet 4. Due to this configuration the pane supporting element 3 has an additional clamping means for fixing the pane supporting element 3 to the glazing bar section 5. It can be seen that one glazing bar section 5 is provided with two pane supporting elements 3 in opposite glazing bar rabbets 4.

The assembly of the pane supporting element 3 into the glazing bar section 5 can be performed by inserting the pane supporting element 3 in longitudinal direction into the glazing bar rabbet 4 and sliding it in longitudinal direction through the glazing bar rabbet 4. In Fig. 1 and 2 the end portion of the pane 2 in assembled condition is free from the pane receiving portion 7, but it is also possible that the pane 2 contacts the pane receiving portion 7 or is even clamped by the pane receiving portion 7.

Fig. 3 shows a cross section of an alternative embodiment. A part of the bottom of the U-shaped pane receiving portion 7 of the pane supporting element 3 touches the glazing bar section 5. It is, however, not fixed to the glazing bar section 5 at that location such that the pane receiving portion 7 is still movable with respect to the glazing bar section 5 in a direction perpendicular to the pane 2. The fixation portion 6 is formed by opposite leg parts of the U-shaped pane supporting element 3. One of the leg parts is attached to the glazing bar section 5 and the opposite leg part is movable with respect to the glazing bar section 5 in a direction parallel to the pane 2 in assembled condition. This embodiment clearly shows that the distance between the glazing bar section 5 and the lower portion of the U-shaped pane receiving portion 7 at the side of the attached leg part is smaller than the distance between the glazing bar section 5 and the lower portion at the side of the movable leg part, as seen parallel to the pane 2 in assembled condition. When the pane 2 expands due to a temperature increase it may push against the lower portion of the pane receiving portion 7 and will touch the side at the movable leg part first. As a consequence, a big part of the pane supporting element 3 within the glazing bar rabbet 4 will rotate about the attached leg part of the fixation portion 6, whereas the movable part of the fixation portion 6 will be displaced further into the glazing bar rabbet.

From the foregoing, it will be clear that the invention provides a greenhouse which can be assembled in a relatively easy manner.

The invention is not limited to the embodiments shown in the drawings and described hereinbefore, which may be varied in different manners within the scope of the claims. It is possible, for example, that the pane is fixed to the pane supporting element in a different way, for example by an adhesive.

## Claims

1. A greenhouse comprising a glazing bar (1) including a glazing bar rabbet (4), the glazing bar rabbet (4) being provided with a pane supporting element (3) which supports a pane (2), wherein the pane supporting element (3) is provided with a fixation portion (6) which is in contact with the glazing bar (1), and a pane receiving portion (7) for receiving an end portion of the pane (2), **characterized in that** the pane receiving portion (7) is disposed deeper in the glazing bar rabbet (4) than the fixation portion (6) and movable with respect to the glazing bar (1) at least in a direction perpendicular to the pane (2) in assembled condition.

2. A greenhouse according to claim 1, wherein the pane supporting element (3) has a U-shaped cross section and the pane receiving portion (7) is formed by a lower portion of the U-shape.

3. A greenhouse according to claim 2, wherein the pane receiving portion (7) is convergent as seen from the open end of the U-shaped cross section of the pane supporting element (3) to the bottom thereof.

4. A greenhouse according to one of the preceding claims, wherein the pane supporting element (3) is a flexible element allowing the pane receiving portion (7) to be movable with respect to the fixation portion (6).

5. A greenhouse according to one of the preceding claims, wherein at least the pane receiving portion (7) has a smooth outer surface.

6. A greenhouse according to one of the preceding claims, wherein the pane supporting element (3) is made of a hard material.

7. A greenhouse according to one of the preceding claims, wherein the pane supporting element (3) has an extension (11) which covers an outer side of the glazing bar (1).

8. A greenhouse according to one of the preceding claims and claim 2, wherein the fixation portion (6) is formed by opposite leg parts of the U-shaped pane supporting element (3), wherein at least one of the leg parts is attached to the glazing bar (1).

9. A greenhouse according to claim 8, wherein one of the leg parts is attached to the glazing bar (1) and the opposite leg part is movable with respect to the glazing bar (1) in at least a direction parallel to the pane (2) in assembled condition.

10. A greenhouse according to claim 9, wherein the lower portion of the U-shape and the glazing bar (1) are adapted such that the distance between the glazing bar (1) and the lower portion at the side of the attached leg part is smaller than the distance between the glazing bar (1) and the lower portion at the side of the movable leg part, as seen parallel to the pane (2) in assembled condition.

## Patentansprüche

1. Ein Gewächshaus, welches eine Scheibensprosse (1) aufweist,
die eine Scheibensprossennut (4) aufweist, wobei die Scheibensprossennut (4) mit einem Scheibenstützelement (3) bereitgestellt ist, welches eine Scheibe (2) stützt, wobei das Scheibenstützelement (3) mit einem Fixierungsabschnitt (6), welcher sich mit der Scheibensprosse (1) in Kontakt befindet, und einem Scheibenaufnahmeabschnitt (7) zum Aufnehmen eines Endabschnitts der Scheibe (2) bereitgestellt ist, **dadurch gekennzeichnet, dass** der Scheibenaufnahmeabschnitt (7) tiefer in der Scheibensprossennut (4) angeordnet ist als der Fixierungsabschnitt (6) und in einem Zusammenbauzustand mit Bezug auf die Scheibensprosse (1) zumindest in eine Richtung senkrecht zur Scheibe (2) bewegbar ist.

2. Ein Gewächshaus gemäß Anspruch 1, wobei das Scheibenstützelement (3) einen U-förmigen Querschnitt hat und der Scheibenaufnahmeabschnitt (7) durch einen unteren Abschnitt der U-Form geformt ist.

3. Ein Gewächshaus gemäß Anspruch 2, wobei der Scheibenaufnahmeabschnitt (7) vom offenen Ende des U-förmigen Querschnitts des Scheibenstützelements (3) zu dessen Boden hin betrachtet konvergent ist.

4. Ein Gewächshaus gemäß irgendeinem der vorhergehenden Ansprüche, wobei das Scheibenstützelement (3) ein flexibles Element ist, welches es dem Scheibenaufnahmeabschnitt (7) erlaubt, mit Bezug auf den Fixierungsabschnitt (6) bewegbar zu sein.

5. Ein Gewächshaus gemäß irgendeinem der vorhergehenden Ansprüche, wobei zumindest der Scheibenaufnahmeabschnitt (7) eine glatte Außenfläche aufweist.

6. Ein Gewächshaus gemäß irgendeinem der vorhergehenden Ansprüche, wobei das Scheibenstützelement (3) aus einem harten Material gemacht ist.

7. Ein Gewächshaus gemäß irgendeinem der vorhergehenden Ansprüche, wobei das Scheibenstützelement (3) eine Erweiterung (11) aufweist, welche eine Außenseite der Scheibensprosse (1) abdeckt.

8. Ein Gewächshaus gemäß irgendeinem der vorhergehenden Ansprüche und Anspruch 2, wobei der Fixierungsabschnitt (6) durch einander entgegengesetzte Beinteile des U-förmigen Scheibenstützelements (3) geformt ist, wobei zumindest eines der Beinteile an der Scheibensprosse (1) befestigt ist.

9. Ein Gewächshaus gemäß Anspruch 8, wobei eines der Beinteile an der Scheibensprosse (1) befestigt ist und das entgegengesetzte Beinteil in einem Zusammenbauzustand mit Bezug auf die Scheibensprosse (1) in zumindest eine Richtung parallel zur Scheibe (2) bewegbar ist.

10. Ein Gewächshaus gemäß Anspruch 9, wobei der untere Abschnitt der U-Form und die Scheibensprosse (1) eingerichtet sind, sodass die Distanz zwischen der Scheibensprosse (1) und dem unteren Abschnitt an der Seite des befestigten Beinteils geringer ist als die Distanz zwischen der Scheibensprosse (1) und dem unteren Abschnitt an der Seite des bewegbaren Beinteils, wenn es im Zusammenbauzustand parallel zur Scheibe (2) betrachtet wird.

## Revendications

1. Serre comprenant un fer à vitrage (1) comprenant une feuillure de fer à vitrage (4), la feuillure de fer à vitrage (4) étant prévue avec un élément de support de vitre (3) qui supporte une vitre (2), dans laquelle l'élément de support de vitre (3) est prévu avec une partie de fixation (6) qui est en contact avec le fer à vitrage (1), et une partie de réception de vitre (7) pour recevoir une partie d'extrémité de la vitre (2), **caractérisée en ce que** la partie de réception de vitre (7) est disposée plus profondément dans la feuillure de fer à vitrage (4) que la partie de fixation (6) et mobile par rapport au fer à vitrage (1) au moins dans une direction perpendiculaire à la vitre (2) dans la condition assemblée.

2. Serre selon la revendication 1, dans laquelle l'élément de support de vitre (3) a une section transversale en forme de U et la partie de réception de vitre (7) est formée par une partie inférieure de la forme de U.

3. Serre selon la revendication 2, dans laquelle la partie de réception de vitre (7) est convergente, comme observé à partir de l'extrémité ouverte de la section transversale en forme de U de l'élément de support de vitre (3) jusqu'à son fond.

4. Serre selon l'une des revendications précédentes, dans laquelle l'élément de support de vitre (3) est un élément flexible permettant à la partie de réception de vitre (7) d'être mobile par rapport à la partie de fixation (6).

5. Serre selon l'une des revendications précédentes, dans laquelle au moins la partie de réception de vitre (7) a une surface externe lisse.

6. Serre selon l'une des revendications précédentes, dans laquelle l'élément de support de vitre (3) est réalisé avec un matériau dur.

7. Serre selon l'une des revendications précédentes, dans laquelle l'élément de support de vitre (3) a une extension (11) qui recouvre un côté externe du fer à vitrage (1).

8. Serre selon l'une des revendications précédentes et la revendication 2, dans laquelle la partie de fixation (6) est formée par des parties de patte opposées de l'élément de support de vitre en forme de U (3), dans laquelle au moins l'une des parties de patte est fixée sur le fer à vitrage (1).

9. Serre selon la revendication 8, dans laquelle l'une des parties de patte est fixée sur le fer à vitrage (1) et la partie de patte opposée est mobile par rapport au fer à vitrage (1) dans au moins une direction parallèle à la vitre (2) dans la condition assemblée.

10. Serre selon la revendication 9, dans lequel la partie inférieure de la forme de U et le fer à vitrage (1) sont adaptés de sorte que la distance entre le fer à vitrage (1) et la partie inférieure du côté de la partie de patte fixée est inférieure à la distance entre le fer à vitrage (1) et la partie inférieure du côté de la partie de patte mobile, comme observé parallèlement à la vitre (2) dans la condition assemblée.
